(19) **Europäisches Patentamt**
**European Patent Office**
**Office européen des brevets**

(11) Veröffentlichungsnummer : **0 302 821 B1**

(12) # EUROPÄISCHE PATENTSCHRIFT

(45) Veröffentlichungstag der Patentschrift :
11.09.91 Patentblatt 91/37

(51) Int. Cl.⁵ : **G01C 9/20**

(21) Anmeldenummer : 88810451.0

(22) Anmeldetag : 01.07.88

(54) Einrichtung zur Neigungsmessung.

(30) Priorität : 24.07.87 CH 2824/87

(43) Veröffentlichungstag der Anmeldung :
08.02.89 Patentblatt 89/06

(45) Bekanntmachung des Hinweises auf die
Patenterteilung :
11.09.91 Patentblatt 91/37

(84) Benannte Vertragsstaaten :
DE FR GB IT SE

(56) Entgegenhaltungen :
DE-A- 2 636 706
DE-A- 2 638 621
US-A- 2 857 804

(73) Patentinhaber : Leica Aarau AG
Schachenallee 25
CH-5000 Aarau (CH)

(72) Erfinder : Scholian, Thomas
Gysulastrasse 68
CH-5022 Rombach (CH)

**Beschreibung**

Die Erfindung betrifft eine Einrichtung zur Messung der Neigung eines Geräteteiles gegenüber der Richtung der Schwerkraft mit

einer, einen optischen Strahlengang erzeugenden Quelle,

einem sich nach der Schwerkraftrichtung einstellenden, den optischen Strahlengang ablenkenden Bauelement,

einem, eine durch Neigungsänderung der Einrichtung bewirkte Verschiebung des Strahlenganges erfassenden Bauelement,

Mitteln zur Führung des Strahlenganges von seiner Quelle über das sich nach der Schwerkraftrichtung einstellende Bauelement bis zu dem die Verschiebung des Strahlenganges erfassenden Bauelement und

einer formstabilen Trägerplatte, welche die den optischen Strahlengang erzeugende Quelle, das sich nach der Schwerkraftrichtung einstellende, den optischen Strahlengang ablenkende Bauelement und das eine durch Neigungsänderung der Einrichtung bewirkte Verschiebung des Strahlenganges erfassende Bauelement trägt.

Bekannte Einrichtungen zur Erfassung einer Neigung oder Neigungsänderung von Geräten oder Teilen derselben sind entweder mechanisch mit dem Gerät verbunden, aber von diesem unabhängig funktionsfähig, oder der Neigungsmesser greift direkt in die Funktion des Gerätes ein, und das Gerät ist nur gemeinsam mit demselben funktionsfähig. Konstruktionen der letztgenannten Art sind bei vermessungstechnischen Instrumenten, wie Nivellieren und Theodoliten bekannt. Sie dienen hier als Kompensatoren, die eine Abweichung der Neigung des Instrumentes von der idealen Horizontallage kompensieren, indem sie die Lage des Bildes des anvisierten Zielpunktes, bzw. des Ablesestrahlenganges entsprechend verschieben. Eine derartige Konstruktion ist in EP-A 154568 (Sercel) offenbart.

Vom Gerät unabhängig funktionsfähige Neigungsmesser arbeiten mit elektrooptischen Mitteln und erzeugen elektrische Ausgangssignale, welche eine Fehlhorizontierung anzeigen. Die in solchen Fällen fehlerhaften Messwerte des Theodoliten werden dann mit einem Mikroprozessor rechnerisch korrigiert, wie dies in DE-OS-2638621 (Kern & Co.AG) beschrieben ist. In diesem Dokument ist ausserdem eine Vorrichtung zur zweikoordinatigen Neigungsmessung offenbart, bei der eine zweikoordinatig empfindliche Schottky-Barrier (SB)-Diode auf einer Basisplatte montiert ist. Sie wird von einer Leuchtdiode her über einen Flüssigkeitsspiegel mit transparentem Glasboden und Anpassungsprisma mit einem Lichtstrahl beaufschlagt, dessen Auftreffpunkt von der Neigung der Basisplatte abhängig ist.

Ein ebenfalls selbständig funktionsfähiges Interferometer zur Bestimmung der horizontalen Lage eines Körpers ist aus US-A-2857804 (Rantsch) bekannt. Dieses Interferometer weist in einem Gehäuse zwei eine Lichtteilerfläche bildende Reflexionsprismen auf, welche durch ein weiteres Prisma mit einer oberen Planfläche ergänzt sind. Zur Zuführung und Auskopplung eines Lichtstrahles sind mit den Reflexionsprismen noch zwei Anpassungsprismen verkittet. Auf die obere Planfläche des weiteren Prismas ist eine Glasplatte aufgekittet, welche am Gehäuse flüssigkeitsdicht befestigt ist und eine Ölschicht mit einer freien Oberfläche trägt.

Bei genauer Horizontierung dieses Interferometers schliesst die Lichtteilerfläche mit der freien Oberfläche der Ölschicht einen Winkel von genau 90° ein und man sieht im ausgekoppelten Lichtstrahl einen Interferenzstreifen unendlicher Breite. Bei Fehlhorizontierung sieht man hingegen mehrere Interferenzstreifen endlicher Breite, deren Anzahl einen Hinweis auf die Neigung des Interferometers gibt. Das hier offenbarte Interferometer dient also zur Bestimmung der horizontalen Lage, Mittel zur Messung der Neigung sind nicht entnehmbar.

Es hat sich gezeigt, dass bekannte, in Geräte eingebaute Einrichtungen zur Neigungsmessung eine nur bei erheblichem konstruktivem Aufwand befriedigende Stabilität, Justierbarkeit und Reproduzierbarkeit ihrer Messwerte aufweisen.

Aufgabe der vorliegenden Erfindung ist es daher, eine Einrichtung zur Neigungsmessung mit verbesserter optisch-mechanischer sowie thermischer Stabilität anzugeben, welche eine einfache und reproduzierbare Montage an einem Messgerät erlaubt.

Als Lösung dieser Aufgabe ist eine Einrichtung zur Messung der Neigung der eingangs genannten Art dadurch gekennzeichnet, dass die Mittel zur Führung des Strahlenganges mit der Trägerplatte starr verbunden sind und den Strahlengang unter mehrfacher Reflexion führen, dass die formstabile Trägerplatte transparent ist und dass das sich nach der Schwerkraftrichtung einstellende, den optischen Strahlengang ablenkende Bauelement eine auf der Trägerplatte aufliegende Flüssigkeit mit frei beweglicher Oberfläche ist, welche dort durch eine auf die Trägerplatte aufgesetzte glockenartige bodenlose Dose zusammengehalten wird, wobei der Strahlengang durch die Trägerplatte hindurch tritt und an der frei beweglichen Oberfläche der Flüssigkeit reflektiert wird. Vorteilhafte Ausbildungen der Einrichtung sind in den Patentansprüchen 2 bis 8 gekennzeichnet.

Die Erfindung wird nun anhand eines in der Zeichnung schematisch dargestellten Ausführungsbeispieles näher erläutert. Es zeigen:

Fig. 1 eine Ansicht eines erfindungsgemässen Neigungsmessgerätes von vorn,

Fig. 2 eine Ansicht des Gerätes gemäss Fig. 1 von unten,

Fig. 3 eine Ansicht des Gerätes gemäss Fig. 1 von hinten,

Fig. 4 eine Ansicht des Gerätes gemäss Fig. 1 von links und

Fig. 5 eine Ansicht des Gerätes gemäss Fig. 1 von rechts.

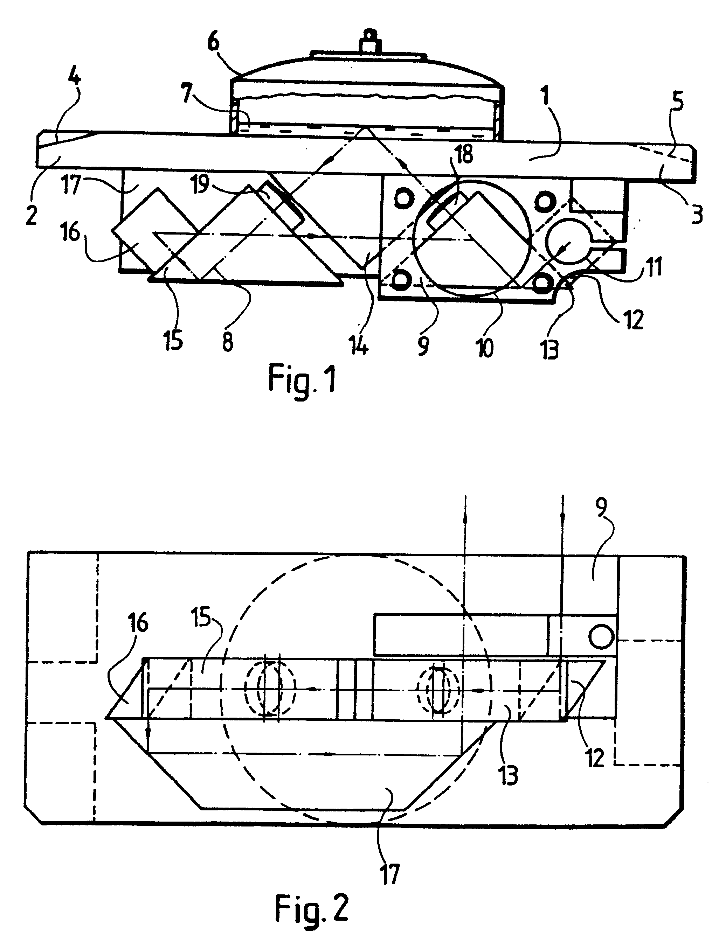

Fig. 1 zeigt von der Längsseite her eine rechteckige Glasplatte 1, welche als Trägerplatte dient. Ihre Dicke ist so gewählt, dass sich eine hinreichende mechanische Stabilität des Neigungsmessgerätes ergibt. Diese Trägerplatte 1 weist in der Längsrichtung vorstehende Teile 2, 3 auf, die mit Schrägen 4, 5 versehen sind und zur geometrisch definierten Montage des Neigungsmessgerätes an Teilen eines anderen Gerätes dienen, dessen Neigung gemessen werden soll und welches selbst nicht dargestellt ist. Auf die Platte 1 ist eine ebenfalls aus Glas bestehende deckelartige Glocke 6 aufgekittet, die teilweise mit einer Flüssigkeit 7 gefüllt ist, welche auf der Platte 1 aufliegt. Ändert sich die Neigung der Platte 1 gegenüber der Schwerkraftrichtung, so behält die Oberfläche der Flüssigkeit 7 in an sich bekannter Weise ihre Orientierung bei. Dabei ändert aber ein im Gerät erzeugter und an der Flüssigkeitsoberfläche totalreflektierter Lichtstrahl 8 seine Lage im Gerät, er wird verschoben.

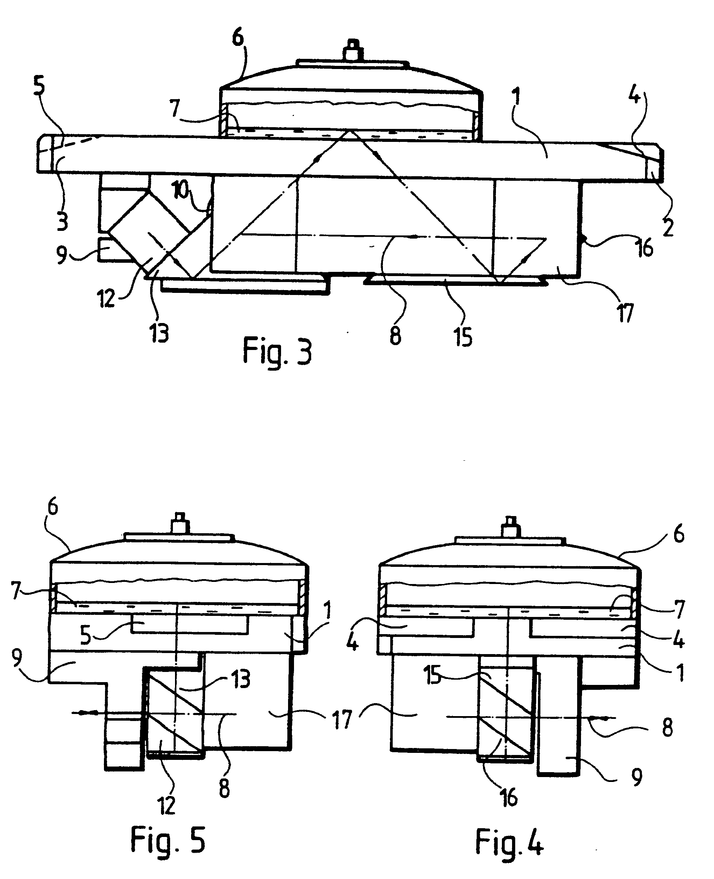

An der Unterseite der Trägerplatte 1 ist, wie insbesondere aus Fig. 2 und Fig. 5 ersichtlich, ein T-förmiger metallischer Träger 9 aufgekittet, der zwei Bohrungen 10, 11 aufweist. Bohrung 11 dient zur Aufnahme einer nicht mit dargestellten Infrarotlicht emittierenden Diode (IRED), welche den Lichtstrahl 8 erzeugt. Bohrung 10 dient zur Aufnahme einer nicht mit dargestellten positionsempfindlichen Fotodiode, welche den Lichtstrahl 8 empfängt und dessen Verschiebungen detektiert.

Von seiner Quelle in der Bohrung 11 gelangt der Lichtstrahl 8 über Umlenkprismen 12, 13 und ein Prisma 14 durch die Trägerplatte 1 unter etwa 45 Grad von unten auf die Oberfläche der Flüssigkeit 7, an der er total reflektiert wird. Nach dieser Totalreflexion gelangt der Strahl 8 wiederum durch die Trägerplatte 1 und Prisma 14 über zwei weitere Umlenkprismen 15, 16 auf ein langgestrecktes Prisma 17, welches ihn unter zweimaliger Reflexion zu der in der Bohrung 10 des Trägers 9 montierten positionsempfindlichen Fotodiode zurückführt, wie dies insbesondere Fig. 2 und Fig. 3 zeigen.

Wie in den Figuren 1 bis 5 dargestellt, sind die Prismen 14, 17 auf die Trägerplatte 1 aufgekittet, die Prismen 13, 15 sind auf das Prisma 17 aufgekittet und die Prismen 12 bzw. 16 sind auf die Prismen 13 bzw. 15 aufgekittet. Auf den Prismen 13 bzw. 15 ist je eine Linse 18 bzw. 19 aufgekittet. Diese Linsen bilden die Leuchtfläche der Quelle des Lichtstrahles 8 auf die positionsempfindliche Fotodiode ab. Diese Fotodiode erzeugt zwei elektrische Ausgangssignale, welche die Lage des Lichtstrahles 8 nach zwei zueinander senkrechten Koordinatrichtungen auf der Empfangsfläche angeben.

Lageänderungen des Strahles 8 in diesen zwei Koordinaten entsprechen Neigungsänderungen des Gerätes nach zwei zueinander senkrechten Richtungen. Ist das Neigungsmessgerät in einem Theodoliten zur Kompensation von Horizontierungsfehlern montiert, so legt man die Richtungen, in denen die Neigungen detektiert werden, zweckmässig in die Horizontalrichtung des Zieles und in die Richtung der Kippachse.

In den Fig. 1 bis 5 sind gleiche Bauelemente mit den gleichen Bezugszeichen bezeichnet. Weist das Gerät, in welches ein erfindungsgemässer Neigungsmesser montiert wird, Anschlagflächen zur Aufnahme der Montageteile 2, 3 der Trägerplatte 1 auf und definieren diese Anschlagflächen den Richtungsbezug des Gerätes, so kann der für sich allein voll funktionsfähige Neigungsmesser vor seiner Montage hinreichend genau justiert werden, ohne dass eine Nachjustierung nach der Montage erforderlich wäre. Die vorstehenden Teile 2, 3 der Trägerplatte 1 weisen zur Montage im nicht mit dargestellten Gerät Auflageflächen auf, die sich vorzugsweise auf derselben Seite befinden, wie die neigungsstabile Flüssigkeit 7. Damit ist sichergestellt, dass bei fehlerfreier Horizontierung diese Oberseite der Grundplatte 1 waagerecht liegt und die Flüssigkeit 7 somit eine Schicht mit um eine Zentralachse symmetrisch verteilter Dicke bildet. In dieser symmetrischen Lage sind dann systematische Messfehler infolge von Strahlverschiebungen. bei Temperaturänderungen mit entsprechenden Brechzahländerungen der Flüssigkeitsschicht 7 minimal. Da der Messstrahlengang bis auf die kurzen Luftwege zwischen den Prismen 13, 14, 15 stets in Glas verläuft, ergibt sich eine geringe Verschmutzungsempfindlichkeit. Durch die geringe Anzahl von Glas-Luft Übergängen des Strahlenganges ist das Auftreten von störenden Nebenreflexen und Mehrfachreflexionen minimal. Anstelle der beschriebenen IR-emittierenden Quelle (IRED) für den Lichtstrahl 8 kann auch eine Quelle für andere optische Strahlung verwendet werden, wenn der vorhandene Lichtempfänger dies erfordert.

**Patentansprüche**

1. Einrichtung zur Messung der Neigung eines Geräteteiles gegenüber der Richtung der Schwerkraft mit

einer, einen optischen Strahlengang (8) erzeugenden Quelle,

einem sich nach der Schwerkraftrichtung einstellenden, den optischen Strahlengang ablenkenden Bauelement (7),

einem, eine durch Neigungsänderung der Einrichtung bewirkte Verschiebung des Strahlenganges (8) erfassenden Bauelement,

Mitteln (12 bis 17) zur Führung des Strahlenganges (8) von seiner Quelle über das sich nach der Schwerkraftrichtung einstellende Bauelement (7) bis zu dem die Verschiebung des Strahlenganges (8) erfassenden Bauelement und

einer formstabilen Trägerplatte (1), welche die den optischen Strahlengang (8) erzeugende Quelle, das sich nach der Schwerkraftrichtung einstellende, den optischen Strahlengang ablenkende Bauelement (7) und das eine durch Neigungsänderung der Einrichtung bewirkte Verschiebung des Strahlenganges (8) erfassende Bauelement trägt, dadurch gekennzeichnet,

dass die Mittel (12 bis 17) zur Führung des Strahlenganges (8) mit der Trägerplatte (1) starr verbunden sind und den Strahlengang (8) unter mehrfacher Reflexion führen, dass die formstabile Trägerplatte (1) transparent ist und dass das sich nach der Schwerkraftrichtung einstellende, den optischen Strahlengang ablenkende Bauelement (7) eine auf der Trägerplatte (1) aufliegende Flüssigkeit (7) mit frei beweglicher Oberfläche ist, welche dort durch eine auf die Trägerplatte (1) aufgesetzte glockenartige bodenlose Dose (6) zusammengehalten wird, wobei der Strahlengang (8) durch die Trägerplatte (1) hindurch tritt und an der frei beweglichen Oberfläche der Flüssigkeit (7) reflektiert wird.

2. Einrichtung gemäss Anspruch 1, dadurch gekennzeichnet, dass die formstabile transparente Trägerplatte (1) auf ihrer ersten Oberfläche die auf ihr aufliegende Flüssigkeit (7) mit frei beweglicher Oberfläche und die diese zusammenhaltende auf sie aufgesetzte glockenartige bodenlose Dose (6) trägt und auf ihrer der ersten gegenüber liegenden zweiten Oberfläche die Mittel (12 bis 17) zur Führung des Strahlenganges (8), sowie die den optischen Strahlengang (8) erzeugende Quelle und das die Verschiebung des Strahlenganges (8) erfassende Bauelement befestigt sind.

3. Einrichtung gemäss Anspruch 1, dadurch gekennzeichnet, dass die einen optischen Strahlengang (8) erzeugende Quelle eine optische Strahlung emittierende Diode ist, welche gemeinsam mit dem eine durch Neigungsänderung der Einrichtung bewirkte Verschiebung des Strahlenganges (8) erfassenden Bauelement in einem metallischen Träger (9) montiert ist, welcher seinerseits mit der formstabilen Trägerplatte (1) verkittet ist und dass die eine optische Strahlung emittierende Diode und das eine Verschiebung des Strahlenganges (8) erfassende Bauelement geometrisch definiert und auswechselbar im metallischen Träger (9) montiert sind.

4. Einrichtung gemäss Anspruch 1, dadurch gekennzeichnet, dass die formstabile Trägerplatte (1) freie Auflageflächen zur räumlich definierten und justagefreien Montage der Einrichtung am zu messenden Geräteteil aufweist und dass die freien Auflageflächen auf jener Seite der Trägerplatte (1) vorgesehen sind, auf der die Flüssigkeit (7) aufliegt und von der aufgesetzten glockenartigen bodenlosen Dose (6) zusammengehalten wird.

5. Einrichtung gemäss Anspruch 1, dadurch gekennzeichnet, dass elektrische Ausgangssignale des die Verschiebung des Strahlenganges (8) erfassenden Bauelementes auch im nicht am Geräteteil montierten Zustand der Einrichtung eine Messung der Neigung der Einrichtung selbst erlauben.

6. Einrichtung gemäss Anspruch 1, dadurch gekennzeichnet, dass die glockenartige bodenlose Dose (6), die formstabile Trägerplatte (1) und die Mittel (12 bis 17) zur Führung des Strahlenganges (8) aus demselben transparenten Werkstoff bestehen.

7. Einrichtung gemäss Anspruch 1, dadurch gekennzeichnet, dass das die Verschiebungen des Strahlenganges (8) erfassende Bauelement als positionsempfindliche Photodiode ausgebildet ist, welche elektrische Ausgangssignale erzeugt, welche die Neigung des Geräteteiles in einer oder zwei Koordinatenrichtungen darstellen.

8. Einrichtung gemäss Anspruch 1, dadurch gekennzeichnet, dass das die Verschiebungen des Strahlenganges (8) erfassende Bauelement als vier Quadranten aufweisende Fotodiode ausgebildet ist, welche elektrische Ausgangssignale erzeugt, welche die Neigung des Geräteteiles in zwei Koordinatenrichtungen darstellen.

## Claims

1. Equipment, for the measurement of the inclination of an instrument part relative to the direction of the gravitational force, with

a source producing an optical ray path (8),

a component (7) setting itself in accordance with the direction of gravity and deflecting the optical ray path,

a component detecting a displacement of the ray path (8) caused by a change in inclination of the equipment,

means (12 to 17) for the guidance of the ray path (8) from its source by way of the component (7) setting itself in accordance with the direction of gravity to the component detecting the displacement of the ray path (8) and with

a carrier plate (1), which is of stable shape and carries the source producing the optical ray path (8), the component (7) setting itself in accordance with the direction of gravity and deflecting the optical ray path and the component detecting a displacement of the ray path (8) caused by a change in inclination of the equipment, characterised thereby, that

the means (12 to 17) for the guidance of the ray path (8) are rigidly connected with the carrier plate (1) and guide the ray path (8) with multiple reflection, that the carrier plate (1) of stable shape is transparent and that the component (7) setting itself in accordance with the direction of gravity and deflecting the optical path is a liquid (7), which rests on the carrier plate (1), has a freely mobile surface and is held together there by a bell-like bottomless cell (6) placed on the carrier plate (1), wherein the ray path (8) passes through the carrier plate (1) and is reflected at the freely mobile surface of the liquid (7).

2. Equipment according to claim 1, characterised thereby, that the transparent carrier plate (1) of stable shape on its first surface carries the liquid (7), that is resting on it and has a freely mobile surface, and the bell-like bottomless cell (6) placed on it and holding the liquid together and the means (12 to 17) for the guidance of the ray path (8) as well as the source producing the optical ray path (8) and the component detecting the displacement of the ray path (8) are fastened on its second surface lying opposite the first.

3. Equipment according to claim 1, characterised thereby, that the source producing an optical ray path (8) is a diode which emits an optical radiation and is mounted together with the component detecting a displacement of the ray path (8) caused by a change in inclination of the equipment in a metallic carrier (9), which is in its turn cemented together with the carrier plate (1) of stable shape, and that the diode emitting an optical radiation and the component detecting a displacement of the ray path (8) are mounted geometrically defined and exchangeably in the metallic carrier (9).

4. Equipment according to claim 1, characterised thereby, that the carrier plate (1) of stable shape displays free bearing surfaces for the spatially defined and adjustment-free mounting of the equipment at the instrument part to be measured and that the free bearing surfaces are provided on that side of the carrier plate (1), on which the liquid (7) rests and is held together by the bell-like bottomless cell (6) placed on.

5. Equipment according to claim 1, characterised thereby, that electrical output signals of the component detecting the displacement of the ray path (8) permit a measurement of the inclination of the equipment even in the state of the equipment, in which it is not mounted at the instrument part.

6. Equipment according to claim 1, characterised thereby, that the bell-like bottomless cell (6), the carrier plate (1) of stable shape and the means (12 to 17) for the guidance of the ray path (8) consist of the same transparent material.

7. Equipment according to claim 1, characterised thereby, that the component detecting the displacements of the ray path (8) is constructed as position-sensitive photo-diode which produces electrical output signals which represent the inclination of the equipment in one or two co-ordinate directions.

8. Equipment according to claim 1, characterised thereby, that the component detecting the displacements of the ray path (8) is constructed as a photo-diode which displays four quadrants and produces electrical output signals which represent the inclination of the equipment in two co-ordinate directions.

## Revendications

1. Dispositif pour la mesure de l'inclinaison d'une partie d'un appareil vis-à-vis de la direction de la pesanteur avec

une source produisant une marche des rayons optiques (8),

un élément de construction s'ajustant selon la direction de la pesanteur, et déviant la marche des rayons optiques (7),

un élément de construction détectant le déplacement de la marche des rayons (8) dû au changement d'inclinaison du dispositif,

des moyens (12 à 17) pour guider la marche des rayons (8) de la source par l'élément de construction (7) s'ajustant selon la direction de la pesanteur jusqu'à l'élément de construction (8) détectant le déplacement de la marche des rayons et

une plaque indéformable de support (1) qui porte la source produisant la marche des rayons optiques, l'élément de construction s'ajustant selon la direction de la pesanteur, déviant la marche des rayons optiques et l'élément de construction détectant un déplacement de la marche des rayons dû à un changement de l'inclinaison du dispositif, caractérisé en ce que

les moyens (12 à 17) pour le guidage de la marche des rayons (8) sont rigidement reliés à la plaque de support (1) et guident la marche des rayons (8) avec des réflexions multiples, en ce que la plaque indéformable de support (1) est transparente et en ce que l'élément de construction (7) s'ajustant selon la direction de la pesanteur et déviant la marche des rayons optiques est un liquide (7) reposant sur la plaque de support (1) avec surface supérieure librement mobile, qui y est retenu par une boîte (6) sans fond en forme de cloche placée sur la plaque de support (1), ainsi la marche des rayons (8) traverse la plaque de support (1) et est réfléchie à la surface supérieure librement mobile du liquide (7).

2. Dispositif selon la revendication 1, caractérisé en ce que la plaque transparente indéformable de support (1) porte, à sa première surface, le liquide (7) reposant sur elle avec une surface supérieure librement mobile et la boîte (6) sans fond en forme de cloche placée sur lui et le retenant, et sur sa seconde surface supérieure opposée à la première, les moyens (12 à 17) pour le guidage de la marche des rayons (8) ainsi que la source produisant la marche des rayons optiques (8) et l'élément de construction détectant le déplacement de la marche des rayons (8) sont fixés.

3. Dispositif selon la revendication 1, caractérisé en ce que la source produisant la marche des rayons optiques (8) est une diode émettant un rayonnement optique qui est montée avec un élément de construction détectant un déplacement de la marche des rayons (8) dû à un changement d'inclinaison du dispositif, dans un support métallique (9), qui, pour sa part, est collé à la plaque indéformable de support (1) et en ce que la diode émettant le rayonnement optique et l'élément de construction détectant un déplacement de la marche des rayons (8) sont géométriquement définis et montés de manière échangeable dans le support métallique (9).

4. Dispositif selon la revendication 1, caractérisé en ce que la plaque indéformable de support (1) présente des surfaces libres d'appui pour le montage défini dans l'espace et sans ajustement du dispositif sur la partie de l'appareil à mesurer et en ce que les surfaces libres d'appui sont prévues du côté de la plaque de support (1) où repose le liquide (7) avec retenue par la boîte sans fond en forme de cloche (6) mise en place.

5. Dispositif selon la revendication 1, caractérisé en ce que des signaux électriques de sortie de l'élément de construction détectant le déplacement de la marche des rayons (8) permettent, même à l'état du dispositif non monté sur la partie de l'appareil, une mesure de l'inclinaison du dispositif lui-même.

6. Dispositif selon la revendication 1, caractérisé en ce que la boîte sans fond (6) en forme de cloche, la plaque indéformable de support (1) et les moyens (12 à 17) pour le guidage de la marche des rayons (8) se composent de la même matière transparente.

7. Dispositif selon la revendication 1, caractérisé en ce que l'élément de construction détectant les déplacements de la marche des rayons (8) a la configuration d'une photodiode sensible à la position, qui produit des signaux électriques de sortie, qui représentent l'inclinaison de la partie de l'appareil dans une ou deux directions de coordonnées.

8. Dispositif selon la revendication 1, caractérisé en ce que l'élément de construction détectant les déplacements de la marche des rayons (8) est configuré comme une photodiode présentant quatre quadrants, qui produit des signaux électriques de sortie, qui représentent l'inclinaison de la partie de l'appareil dans deux directions de coordonnées.

Fig. 1

Fig. 2

Fig. 3

Fig. 5

Fig. 4